# EUROPEAN PATENT APPLICATION

(11) **EP 2 209 309 A1**
(43) Date of publication of application: **21.07.2010**
(21) Application number: 10150517.0
(22) Date of filing: 12.01.2010
(51) Int. Cl.: H04N 5/445, H04L 29/08

(54) **Terminal device, broadcasting receiving apparatus and control method thereof**

(30) Priority: 14.01.2009 KR 20090003125
(71) Applicant: Samsung Electronics Co., Ltd., Suwon-si, Gyeonggi-do (KR)
(72) Inventor: Kim, Jae-kwon, Gyeonggi-do (KR); Park, Jong-wook, Seoul (KR)
(74) Representative: Walaski, Jan Filip

(57) **Abstract**

A terminal device coupled to a broadcasting receiving apparatus is provided. The terminal device includes a communication unit which receives electronic program guide (EPG) information from the Internet, a display unit which displays an EPG screen including broadcasting channel information based on the EPG information, and a control unit which controls the broadcasting receiving apparatus to perform an operation corresponding to a selection.

## Description

Apparatuses and methods consistent with the present invention relate to a terminal device, a broadcasting receiving apparatus, and a control method thereof, and more particularly, to a terminal device for displaying an Electronic Program Guide (EPG) screen and a broadcasting receiving apparatus and a control method thereof.

EPG information provides information regarding various programs broadcast via terrestrial broadcasting or cable broadcasting to help a viewer choose a program the viewer wants to watch. The EPG information includes a list of channels provided, the title of programs, and the broadcasting times. Using the EPG information, a viewer may choose a program to watch, and also reserve recording of a program.

In order to view the EPG information, a user should display an EPG screen on a digital television (TV), and this may interfere with the currently broadcast program. In addition, the content of the digital broadcasting information included in EPG information is poor and limited.

In order to address the above issues, a viewer may visit an Internet site which provides information by reprocessing an EPG, but this may cause inconvenience to the viewer.

In addition, it is difficult for a user to check more than two days of the EPG information in a conventional matrix form which includes the state of reserved viewing or recording at a glance, and the information is checked using four directional keys of a remote control cursor. In addition, in order to perform reserved/immediate recording, the user is required to manipulate a sequence of keys on the remote controller using a menu related to recording, and this causes inconvenience to the user.

Exemplary embodiments of the present invention overcome the above disadvantages and other disadvantages not described above. Also, the present invention is not required to overcome the disadvantages described above, and an exemplary embodiment of the present invention may not overcome any of the problems described above.

Aspects of the present invention relate to a terminal device which displays an EPG screen via a terminal device connected a broadcasting receiving apparatus, and the broadcasting receiving apparatus, a control method thereof.

According to an exemplary embodiment of the present invention, there is provided a terminal device coupled to a broadcasting receiving apparatus, the terminal device including a communication unit that receives EPG information from the Internet, a display unit that displays broadcasting channel information on an EPG screen based on the EPG information, and a control unit that controls the broadcasting receiving apparatus to perform an operation corresponding to a user's selection if the user's selection is made via the EPG screen.

The display unit may comprise a touch screen, and the control unit may generate a control command corresponding to a manipulation of the touch screen and transmit the control command to the broadcasting receiving apparatus via the communication unit. The communication unit may include a first communication module that receives the EPG information and a second communication module that transmits the control command to the broadcasting receiving apparatus. The display unit may display information regarding a broadcasting channel and a menu.

The control command may include at least one of a command to select a broadcasting program, a command to record a broadcasting program, and a command to preview a broadcasting program. The command to select the broadcasting program may be performed by manipulation of touch and flick or button icon click on a broadcasting program icon associated with the broadcasting program.

If a command to preview a broadcasting program is received via the touch screen, the control unit may transmit the command to the broadcasting receiving apparatus, and control the communication unit so as to receive contents corresponding to the command to preview the broadcasting program. The control unit may display detailed information of a broadcasting program if a command for a detailed viewing of the broadcasting program is received via the touch screen.

The display unit may display a user menu area for managing a plurality of broadcasting programs selected on the EPG screen, and the plurality of broadcasting programs may be selected by touch and drag. The display unit may display a user channel area for composing a single channel with a plurality of broadcasting programs selected on the EPG screen, and the plurality of broadcasting programs may be selected by touch and drag.

The control unit may receive contents from an apparatus supporting the Digital Living Network Alliance (DLNA) standard and display the contents. The control unit may convert the EPG screen into a background mode if a predetermined condition is satisfied, and the background mode may include at least one of an electronic album mode, a reserved program informing mode, a screen protection mode, and a widget mode.

According to another exemplary embodiment of the present invention, there is provided broadcasting receiving apparatus including a communication unit that receives a control command from a terminal device displaying an EPG screen by receiving EPG information from the Internet and a control unit that performs an operation corresponding to the control command by selecting a broadcasting channel according to the control command.

The control command may be generated by at least one of touch and hold, touch and drag, and touch and flick on a touch screen of the terminal device.

According to another exemplary embodiment of the present invention, there is provided a method for controlling a terminal device coupled to a broadcasting receiving apparatus, the method including receiving EPG information from the Internet, displaying an EPG screen including broadcasting channel information based on the EPG information, and controlling the broadcasting receiving apparatus to perform an operation corresponding to a selection if the selection is made via the EPG screen.

The controlling may generate a control command corresponding to manipulation of a touch screen on which the EPG screen is displayed and transmit the control command to the broadcasting receiving apparatus. The terminal device may include a first communication module to receive the EPG information and a second communication module to transmit the control command to the broadcasting receiving apparatus. The displaying the EPG screen may display information regarding a broadcasting channel and a menu. The control command may include at least one of a command to select a broadcasting program, a command to record a broadcasting program, and a command to preview a broadcasting program. The command to select the broadcasting program may be performed by manipulation of touch and flick or button icon click on a broadcasting program icon associated with the broadcasting program.

The method for controlling a terminal device may further include transmitting a command to preview a broadcasting program to the broadcasting receiving apparatus and receiving contents corresponding to the command to preview the broadcasting program, if the command to preview the broadcasting program is received via the touch screen. The method for controlling a terminal device may further include displaying detailed information of a broadcasting program if a command to view the broadcasting program in detail is received via the touch screen. The method for controlling a terminal device may further include displaying a user menu area to allow a user to manage a plurality of broadcasting programs selected by the user on the EPG screen and selection of the plurality of broadcasting programs may be performed by touch and drag.

The method for controlling a terminal device may further include displaying a user channel area for composing a single channel with a plurality of broadcasting programs selected by a user on the EPG screen, and selection of the plurality of broadcasting programs may be performed by touch and drag. The method for controlling a terminal device may further include receiving contents from an apparatus which supports the DLNA standard and displaying the contents.

The method for controlling a terminal device may further include converting the EPG screen to a background mode if a predetermined condition is satisfied, and the background mode may include at least one of an electronic album mode, a reserved program informing mode, a screen protection mode, and a widget mode.

The above and/or other aspects of the invention will become apparent and more readily appreciated from the following description of exemplary embodiments, taken in conjunction with the accompanying drawings, of which:
FIGS. 1A, 1B and 1C are schematic views of an image system according to exemplary embodiments of the present invention;
FIG. 2 is a block diagram of a structure of the terminal device illustrated in FIGS. 1A, 1B and 1C;
FIG. 3 is a block diagram of a structure of a broadcasting receiving apparatus illustrated in FIGS. 1A, 1B and 1C;
FIG. 4 is a block diagram of a detailed structure of the terminal device and the broadcasting receiving apparatus in FIG. 2 and FIG. 3;
FIGS. 5A and 5B are schematic views of an EPG screen displayed on a terminal device according to exemplary embodiments of the present invention;
FIG. 6 is a schematic view of a detailed view screen of a broadcasting program according to an exemplary embodiment of the present invention;
FIGS. 7A, 7B and 7C are schematic views provided to explain the function of a user manual according to exemplary embodiments of the present invention;
FIG. 8 is a schematic view provided to explain a user channel menu according to an exemplary embodiment of the present invention;
FIGS. 9A and 9B are schematic views provided to explain a background mode of a terminal device according to exemplary embodiments of the present invention;
FIG. 10 is a flow chart of a method for controlling a terminal device according to an exemplary embodiment of the present invention;
FIG. 11 is a flow chart of a method for controlling a terminal device according to another exemplary embodiment of the present invention.

Reference will now be made in detail to exemplary embodiments of the present invention, examples of which are illustrated in the accompanying drawings, wherein like reference numerals refer to like elements throughout. Exemplary embodiments are described below, in order to explain the present invention by referring to the figures.

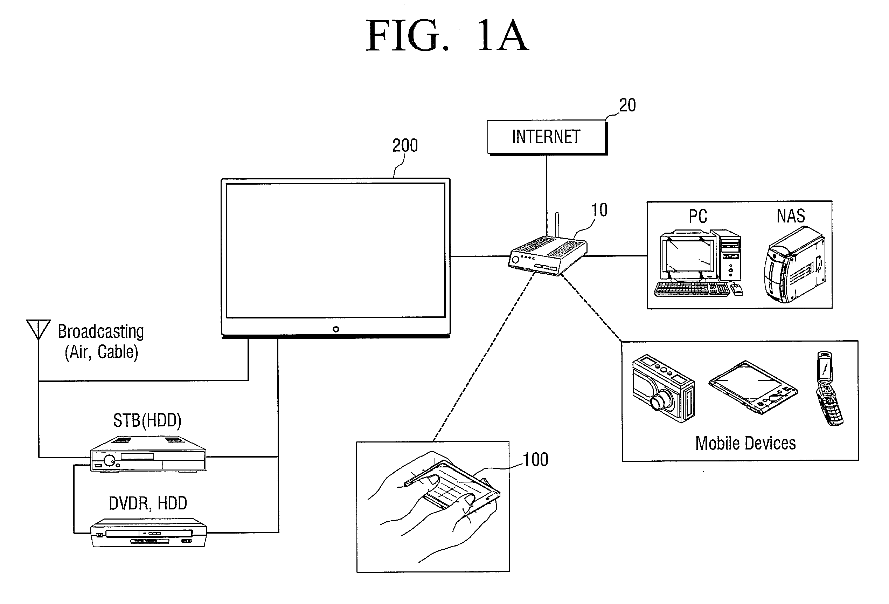

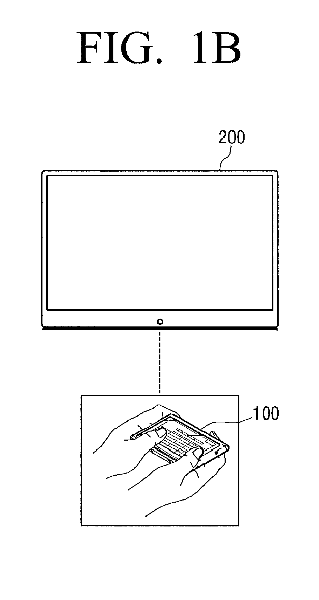

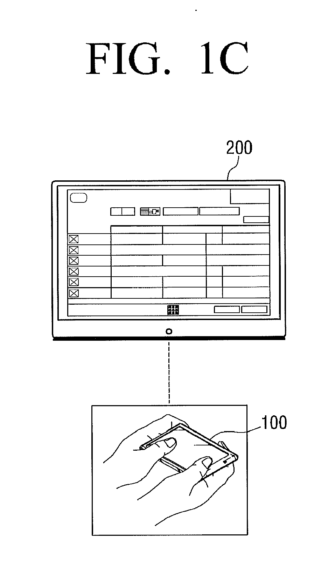

FIGS. 1A, 1B and 1C are schematic views of an image system according to exemplary embodiments of the present invention. Referring to FIG. 1A, the present image system includes a terminal device 100 and a broadcasting receiving apparatus 200, and includes peripheral apparatuses.

The broadcasting receiving apparatus 200 may be a digital TV which receives and outputs a broadcasting signal via a tuner, and is coupled to the terminal device 100 via a network 10. The network 10 is implemented to be accessible to the Internet 20. For instance, the network 10 may be implemented using wireless telecommunication technology such as WiFi, IEEE 802.11 WLAN, HOME RF, Bluetooth, HR WPAN, UWB, LR WPAN, and IEEE 1394.

The terminal device 100 controls the function of the broadcasting receiving apparatus 200 via the network 10, and receives various data including EPG data from the Internet 20 via the network 10 and displays the data. The terminal device 100 may receive EPG data provided via the broadcasting receiving apparatus 200.

In addition, the terminal device 100 may receive appropriate EPG data depending on the region that a user lives, or depending on the type of broadcasting (e.g., terrestrial, wired, cable, satellite, CS, or BS).

As illustrated in FIG. 1C, the broadcasting receiving apparatus 200 may receive EPG data together with a broadcasting signal and display them via a tuner. Alternatively, the broadcasting receiving apparatus 200 may receive various data including EPG data from the Internet 20 via a separate communication module.

In addition, apparatuses such as a Set-Top Box (STB), a Blu-ray Disc Player (BDP), a Digital Versatile Disc Player (DVDP), a Video Cassette Recorder (VCR), a Personal Computer (PC), and a Network Attached Storage (NAS), and mobile apparatuses such as a mobile phone, a camcorder, a personal media player (PMP), and a digital camera may be coupled to the network 10.

The terminal device 100 may not only control the broadcasting receiving apparatus 200 and provide real-time broadcasting received via the broadcasting receiving apparatus 200, but also provide an external input image received via an external apparatus coupled to the broadcasting receiving apparatus 200.

A plurality of terminal devices 100 may be coupled to the broadcasting receiving apparatus 200. In this case, the broadcasting receiving apparatus 200 may have a plurality of tuners, and it is possible for a user to view different broadcasting programs received through a plurality of tuners from the plurality of terminal devices 100.

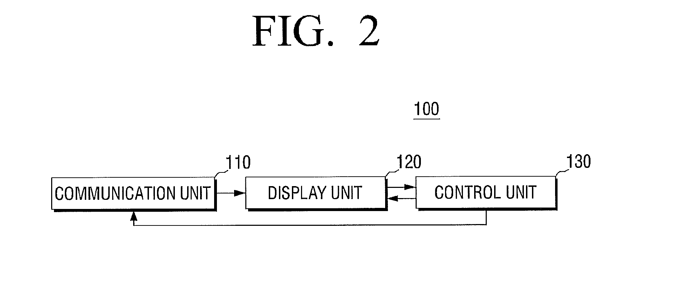

FIG. 2 is a block diagram of a structure of the terminal device illustrated in FIGS. 1A, 1B and 1C. Referring to FIG. 2, the terminal device 100 includes a communication unit 110, a display unit 120, and a control unit 130. The communication unit 110 receives EPG information from the Internet 20 via the network 10. The communication unit 110 may be implemented as a wireless communication module performing wireless communication.

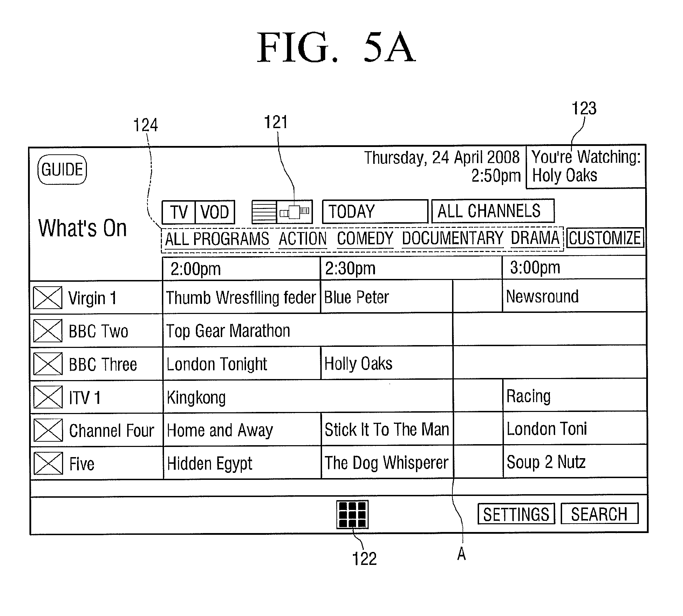

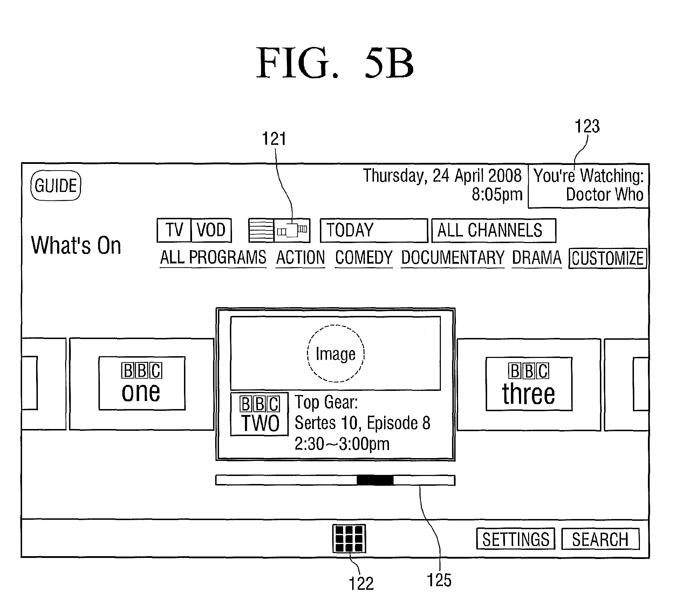

The display unit 120 displays an EPG screen including broadcasting channel information based on EPG information received via the communication unit 110. More specifically, the display unit 120 may display an EPG screen displaying broadcasting programs with reference to an axis of time or an axis of broadcasting channel (e.g. grid view type), or may display an EPG screen displaying broadcasting programs with reference to broadcasting channels (e.g. visual view type). More detailed explanation will be provided with reference to FIGS. 5A and 5B.

In addition, the display unit 120 may provide an appropriate EPG screen depending on the region a user lives and the type of received broadcasting (e.g. terrestrial, wired, cable, satellite, CS, or BS).

The display unit 110 may be implemented as a Cathode Ray Tube (CRT), Liquid Crystal Display (LCD), a Thin film Transistor Liquid Crystal Display (TFT-LCD), Plasma Display Panel (PDP), a flexible display, or a Head Mounted Display (HMD).

The display unit 120 may display various menus related to the EPG screen in the form of an icon or a text.

Specifically, the display unit 120 may display a user menu section for directly managing a plurality of broadcasting programs a user selects, a user channel section for creating a channel with the plurality of programs a user selects, and a section for providing information regarding a currently broadcast program via the broadcasting receiving apparatus 200, and may also display various menus needed to operate the terminal device 100 in the form of a main menu or a sub menu.

The display unit 120 may be implemented as a touch screen. The touch screen refers to a screen which directly receives an input by sensing a touch to a text or a location on the screen by a finger of other objects without using a separate input apparatus, and analyzes the location of the touch so that the input can be processed appropriately by stored software.

A touch panel may be attached to a general display screen to function as a touch screen. The touch panel is a panel which identifies a touch of a finger or location of an object having electric charge using a layer detecting electric capacity, a panel which uses a resistance layer to detect a touch of a finger or location of other objects, or a panel which forms numerous rectangular grids by flowing invisible infrared rays up and down and right and left to detect a location of an object when the object contact the grids.

Accordingly, when the text or image on the screen with a touch panel is touched by a finger, the item selected by a user is identified according to the location of contact, and a corresponding command is processed in a CPU. Accordingly, a user may obtain desired information easily.

The display unit 120 outputs a touch signal corresponding to contact by a user to the control unit 130. The contact by a user may be made by a user's fingertip or other objects.

The display unit 120 may be implemented as a picture in picture (PIP). In this case, a main screen displays contents provided by the broadcasting receiving apparatus 200 and a sub screen may display an EPG screen. The opposite configuration for the PIP may also be possible.

The control unit 130 controls comprehensive operation of the terminal device 100, and in particular, if a user makes a selection on the EPG screen, the broadcasting receiving apparatus 200 controls the terminal device 100 to perform an operation corresponding to the user's selection.

The control unit 130 may generate a control command corresponding to a manipulation of the display unit 120 which is implemented as a touch screen, and may transmit the command to the broadcasting receiving apparatus 200 via the communication unit 110.

In an exemplary embodiment of the present invention, the communication unit 110 receives EPG information from the Internet 20 via the network 10 and transmits a control command to the broadcasting receiving apparatus 200 at the same time, but this is only an example. A plurality of modules may be implemented so that the first communication module (not illustrated) receives EPG information from the Internet 20 while the second communication module (not illustrated) transmits a control command to the broadcasting receiving apparatus (not illustrated). In this case, the first communication module (not illustrated) may be implemented as wireless communication technology accessible to the Internet such as WiFi, and IEEE 802.11 WLAN, and the second communication module (not illustrated) may be implemented as wireless communication technology which supports near field communication, such as ZigBee and Bluetooth.

If a command to view a certain broadcasting program is received, the control unit 130 checks the power state of the broadcasting receiving apparatus 200, and if the power is turned off, a command to turn on the power may be transmitted.

Specifically, a control command transmitted to the broadcasting receiving apparatus 200 via the communication unit 110 may be a command to select a relevant broadcasting program, a command to perform recording, or a command to preview. The command to select a relevant broadcasting program may be performed by touch and flick, button icon click, or other selection manipulation. That is, if a broadcasting program displayed on the EPG screen is touched and flicked, the control unit 130 determines that the relevant broadcasting program is selected, and transmits a command to select the broadcasting program to the broadcasting receiving apparatus 200. However, this is only an example. The command to select a broadcasting program may be received by touch and flick in which a program on the EPG screen is touched and then flicked left, right, down, by touch and hold in which the program is touched and held for a predetermined period of time, or by touch and drag in which the program is touched and dragged to a certain area (for instance, to an icon or text indication channel selection).

The command to perform recording may be performed when a main recording execution menu displayed on the EPG screen (for instance, icon or text indicating recording menu is displayed on the screen), a detailed view screen, or a user menu described above is touched. A command to record/reserve recording a program may be performed when an icon or text (e.g. a user menu) displayed on the screen is touched and dragged.

If a command to record a program is received via the EPG screen, the broadcasting receiving apparatus 200 may perform recording by controlling an internal recording module (e.g., a personal video recorder (PVR)) or an external recording apparatus.

Specifically, if the terminal device 100 transmits the program information and reserve recording command to the broadcasting receiving apparatus 200, the broadcasting receiving apparatus may notify the terminal device 100 of whether it is possible to perform reserve recording considering previous reserve recording schedule and storage area.

The command to preview a broadcasting program may be received via a detailed view screen of the broadcasting program. For instance, if there is a touch and hold manipulation with regard to a certain broadcasting program on the EPG screen, the detailed view screen for the broadcasting program may be displayed on the EPG screen. Preview of the broadcasting program may be performed if an icon or text for preview is touched. The preview screen may be provided on part of the screen or on the entire screen.

If a command to preview a program is received via a touch screen, the control unit 130 transmits the preview command to the broadcasting receiving apparatus 200 via the communication unit 110, and the broadcasting receiving apparatus 200 may select the broadcasting program to be previewed, perform trans-coding of the contents, and transmit the contents to the terminal device 100.

If the state of the terminal device 100 satisfies predetermined conditions, the control unit 130 may convert the EPG screen into a predetermined background mode. The background mode may be at least one of an electronic album mode, a reserved program informing mode, a screen protection mode, and a widget mode.

In the case of the electronic album mode, media contents stored in a memory in the terminal device 100 may be output. Media contents stored in a PC which supports the DLNA standard may be displayed, or media contents stored in an external memory may be displayed. The media contents may be a picture, a video clip or music.

In the case of the reserved-program informing mode, if a certain broadcasting program is reserved to be viewed, it is informed to a user by popping up a notification window on the display unit 120, outputting an alarm via a speaker, using vibration, or combining the above.

In the case of the screen protection mode, the screen may be displayed in black, the brightness of the screen may be set to be lower than usual, or the system itself may be turned off.

In the case of the widget mode, various types of widgets ranging from simple accessory widgets such as a clock, a calculator, a memo, and a calendar to functional widgets which allow a user to check frequently-searched Internet information without operating a web browser, such as weather forecast, stock information, foreign exchange information, news, and games may be applied. A ticker which supplies information even though a user is not viewing the relevant program may also be one of the widgets.

Satisfying predetermined conditions may refer to a case in which a touch on a certain area of the display unit 120 is sensed while the terminal device 100 has not been used for a predetermined period of time.

The terminal device 100 supports the DLNA standard, and may receive media contents from an external apparatus which supports the DLNA standard and output them to the display unit 120 (not illustrated) or a speaker (not illustrated). For instance, the control unit 130 may receive media contents such as a picture, a video clip, or music from a PC which supports the DLNA standard and may output time via the display unit 120 or a speaker.

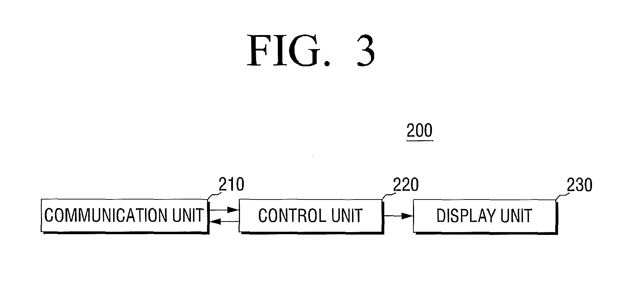

FIG. 3 is a block diagram of a structure of a broadcasting receiving apparatus illustrated in FIGS. 1A, 1B and 1C. Referring to FIG. 3, the broadcasting receiving apparatus 200 includes a communication unit 210, a display unit 220, and a control unit 230.

The communication unit 210 receives a control command from the terminal device 100 which displays EPG information received from the Internet via a wireless network. The communication unit 210 may be implemented as a wireless communication module performing wireless communication.

The control unit 220 selects a broadcasting channel according to a control command received via the communication 210 and performs an operation corresponding to the control command.

Specifically, if a command to preview a program is received via the communication unit 210, the control unit 220 selects the channel of the program to be previewed and converts the data so that the data can be provided to the terminal device 100 via the communication unit 210.

If a command to record a program is received via the communication unit 210, the control unit 220 may perform recording the broadcasting program using an internal recording module such as a PVR which uses a hard drive mounted in a digital broadcasting receiver itself or a set-top box. The broadcasting program may also be recorded by controlling an external recording apparatus.

The display unit 230 displays a broadcasting channel selected by the control unit 220.

In the exemplary embodiment of the present invention in FIG. 2 and FIG. 3, the EPG screen is displayed on the terminal device 100 and a user's command is received through the displayed EPG screen as illustrated in FIG. 1B, however it is also possible that the broadcasting receiving apparatus 200 receives EPG information and displays the EPG screen and the terminal device 100 receives a user's command as illustrated in FIG. 1C. For instance, an identifier such as a cursor which indicates movement is displayed on the EPG screen of the display unit 230 of the broadcasting receiving apparatus 200, and the cursor can be moved or the item on which the cursor is placed can be selected via the terminal device 100 to receive a user's command. That is, part of or entire area of the display unit 120 of the terminal device 200 may be operated as interface to receive a touch signal by a user. In this case, if interface (not illustrated) on the display unit 120 is touched and dragged, the control unit 130 may transmit a control command corresponding to the dragging to the broadcasting receiving apparatus 200 and move the cursor on the broadcasting receiving apparatus 200 accordingly.

Dragging is the action of touching a point and dragging it to a different location. The distance of dragging may vary depending on the movement of a user.

If manipulation such as touch and flick or touch and hold occurs while a cursor is located on an item on the EPG screen of the broadcasting receiving apparatus 200, the terminal device 100 may transmit a command to execute the item to the broadcasting receiving apparatus 200. In this case, part of or the entire area of the display unit 130 may function as an interface to receive a user's touch signal, or the display unit 130 may maintain its original function explained in FIG. 2.
Accordingly, a user may control the EPG screen viewing the screen of the broadcasting receiving apparatus 200 without viewing the screen of the terminal device 100. In an exemplary embodiment of the present invention, the EPG screen on the broadcasting receiving apparatus 200 is controlled via the terminal device 100, but various screens on the broadcasting receiving apparatus 200 such as an OSD menu provided by the broadcasting receiving apparatus 200 may be controlled in the above-explained manner.

The EPG screen explained in the present specification and a control method thereof are applicable to an exemplary embodiment of the present invention, if the EPG screen is displayed on the broadcasting receiving apparatus 200.

The above explained examples may be set as defaults by a manufacturer, but may be changed by a user. That is, a user may display the EPG screen on the display device 100 and/or the broadcasting receiving apparatus 200, and the function of the terminal device 100 may change accordingly.

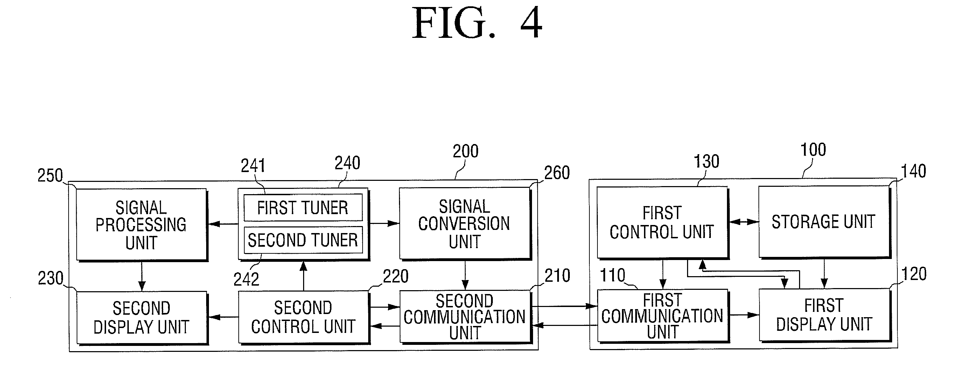

FIG. 4 is a block diagram of a detailed structure of the terminal device and the broadcasting receiving apparatus in FIG. 2 and FIG. 3. Referring to FIG. 4, the terminal device 100 includes the first communication 110, the first display unit 120, the first control unit 130 and the storage unit 140, and the broadcasting receiving apparatus 200 includes the second communication unit 210, the second control unit 220, the second display unit 230, the tuner unit 240, the signal processing unit 250, and the signal conversion unit 260. The detailed description regarding the section in FIG. 4 which overlaps with the elements illustrated in FIG. 2 and FIG. 3 will be omitted.

If a user's command is received via the touch screen on the first display unit 120 of the terminal device 100, the first control unit 130 responds to the user's command and transmits the user's command to the broadcasting receiving apparatus 200 via the first communication 110 if necessary. As described above, the first communication unit 110 may have the first communication module (not illustrated) which receives EPG information and the second communication module (not illustrated) which transmits a user's command to the broadcasting receiving apparatus 200.

The second communication unit 210 of the broadcasting receiving apparatus 200 functions as the terminal device 100 and interface performing data communication.

The second control unit 220 controls comprehensive operation of the broadcasting receiving apparatus 200, and particularly controls the broadcasting receiving apparatus 200 according to the control command received from the terminal device 100. The commands received from the terminal device 100 may be various commands necessary to operate the broadcasting receiving apparatus 200 including a command to select a channel, a command to record a program, a command to preview a program, a command to change a channel, and a command to adjust volume.

The tuner unit 240 selects a broadcasting channel according to the control signal of the control unit 220. The tuner unit 240 may include a plurality of tuners, for instance, may include the first tuner 241 and the second tuner 242. Specifically, the first tuner 241 may select a broadcasting channel output to the first display unit 120, and the second tuner 242 may select a broadcasting channel output to the second display unit 230.

The plurality of tuners in the tuner unit 241 may also select a broadcasting channel output to the first display unit 120. In this case, if a plurality of terminal devices 100 are coupled to the broadcasting receiving apparatus 200, each terminal device 100 may view a different broadcasting program via the plurality of tuners.

The signal processing unit 250 converts a signal received from the second tuner 242 into a signal of which format can be processed in the second display unit 230, and processes the signal. In addition, the signal processing unit 250 may perform signal processing necessary for the received broadcasting program information signal, if necessary.

The signal processing unit 250 may include various components necessary for signal processing including a decoder which decodes a received composite video broadcast signal (CVBS) or an s-video signal, an A/D converter which converts a received component signal or an analog signal, a PC signal into a digital signal, and a transition minimized differential signaling receiving unit which divides a DVI-signal into an R, G, B, digital signal and an H/V signal.

The signal processing unit 250 may include a scaler which converts the converted signal so that the signal is suitable for vertical frequency, resolution, and screen ratio appropriate for the output scale of the second display unit 230. In this case, the second display unit 230 may display the image signal processed by the signal processing unit 250 on the screen.

The second control unit 220 may select a broadcasting channel by controlling the first tuner 241 according to the command received from the terminal device 100. That is, if a command to view a program or a command to preview a program is received from the terminal device 100, the second control unit 220 may control the first tuner 241 so that the broadcasting channel is selected.

The signal conversion unit 260 converts the broadcasting signal received via the first tuner 241 into a signal of which format can be processed in the first display unit 120 in the terminal device 100. The signal conversion unit 260 may transcode the broadcasting signal received via the first tuner 241. In addition, the signal conversion unit 260 may change the transmission rate of the transmitted broadcasting signal and perform transcoding. For instance, the signal conversion unit 260 may perform bit rate conversion, frame rate conversion, and resolution conversion and may adaptively perform transcoding considering performance of the terminal device 100. In this case, the second control unit 220 may provide the terminal device 100 with the transcoded broadcasting signal by the signal conversion unit 260 via the second communication unit 210.

If a command to reserve recording is received from the terminal device 100, the second control unit 220 may notify the terminal device 100 of whether reserve-recording is possible considering previously reserved recording schedule and storage area. The terminal device 100 may receive a contents list of reserved recording and related information and make a correction/deletion.

If there is a notification that recording using a PVR is not possible, the terminal device 100 may display a pop-up window for using an external recording apparatus.

The terminal device 100 may further include the storage unit 140. The storage unit 140 may be implemented as a non-volatile memory (NVM, NVRAM), and more specifically, as a ROM or a flash ROM.

The storage unit 140 may store an operating program necessary to operate the terminal device 100 and EPG information downloaded from the Internet, and may store media contents necessary for the background mode.

In addition, the terminal device 100 may provide a function to view an externally input image input via the external apparatus (not illustrated) coupled to the broadcasting receiving apparatus 200. Specifically, if a user selects an apparatus in a device manager area displayed on the screen of the terminal device 100 and touches and flicks it, the terminal device 100 checks a power state of the external apparatus and the broadcasting receiving apparatus 200 to turn the power on, and transmits a command to convert to an external input, to the broadcasting receiving apparatus 200 and transmits a command to play the apparatus to the external apparatus. The user may control the external apparatus via an external apparatus control menu displayed on the terminal device 100.

FIGS. 5A and 5B are schematic views of an EPG screen displayed on a terminal device according to exemplary embodiments of the present invention. FIG. 5A illustrates a broadcasting program-based EPG screen, and illustrates displaying EPG information by setting a horizontal axis as a time axis and a vertical axis as a broadcasting channel axis (e.g., a grid view). An icon 121 to convert to the broadcasting channel-based EPG screen illustrated in FIG. 5B and a user menu icon 122 to manage a broadcasting program a user wants may be displayed on the screen.

The title of a broadcasting program currently displayed on the broadcasting receiving apparatus 200 may be displayed on one side of the EPG screen. Sometimes, the title of a broadcasting channel providing the broadcasting program (such as KBS 1 or MBC) and the thumbnail image of the broadcasting program may be displayed together.

There may be an area for selecting a genre (such as all programs, action, comedy, documentary, or drama) in which a user is able to select information regarding a broadcasting program of a genre that he or she desires.

An area for informing current time A may be displayed on the EPG screen.

FIG. 5B illustrates a broadcasting channel-based EPG screen (e.g. a visual view), and a plurality of broadcasting channel areas may be displayed in a row. If a user selects a broadcasting channel on the screen, the selected broadcasting channel area is displayed distinctively from other broadcasting channel areas, and the title of the broadcasting program and broadcasting time may be displayed along with the thumbnail image or the preview screen of the broadcasting program.

In this case, as the selected broadcasting channel area moves to the center of the screen, the location of other broadcasting channel areas may change. The broadcasting channel area may be moved by a touch scroll method, or the broadcasting channel area may be moved using a separately displayed scroll bar 125.

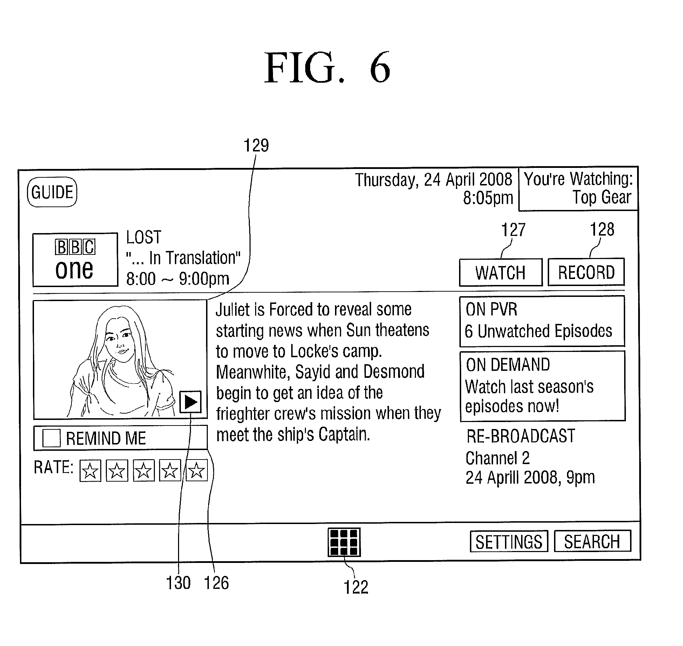

FIG. 6 is a schematic view of a detailed view screen of a broadcasting program according to an exemplary embodiment of the present invention. If a user touches a broadcasting program area on the screens illustrated in FIG. 5A and FIG. 5B, the detailed information of the broadcasting program may be displayed as illustrated in FIG. 6.

An area 126 to receive a user's command to add the broadcasting program to a user's menu, an area 127 to receive a user's command to select the broadcasting program in the broadcasting receiving apparatus 200, and an area 128 to receive a user's command to record the broadcasting program, in addition to the title, broadcasting time, contents, information regarding encore broadcasting, related commercials, and recording information of the broadcasting program may be displayed on the detailed view screen. An area for a device manager to manage an external apparatus coupled to the broadcasting receiving apparatus 200 and an area to search a desired broadcasting program may also be displayed.

In addition, the thumbnail image 129 of the broadcasting program may be displayed, and a preview icon 130 to preview the program on the terminal device may be displayed on a predetermined portion of the screen.

If the preview icon 130 is touched or if the preview area is touched, the terminal device 100 may receive the relevant contents by sending a preview command to the broadcasting receiving apparatus 200. The preview area may be part of the screen or the entire screen.

Uniform resource locator (URL) information of the broadcasting program may be displayed on the detailed view screen, and a user may be connected to the relevant Internet site using the URL information.

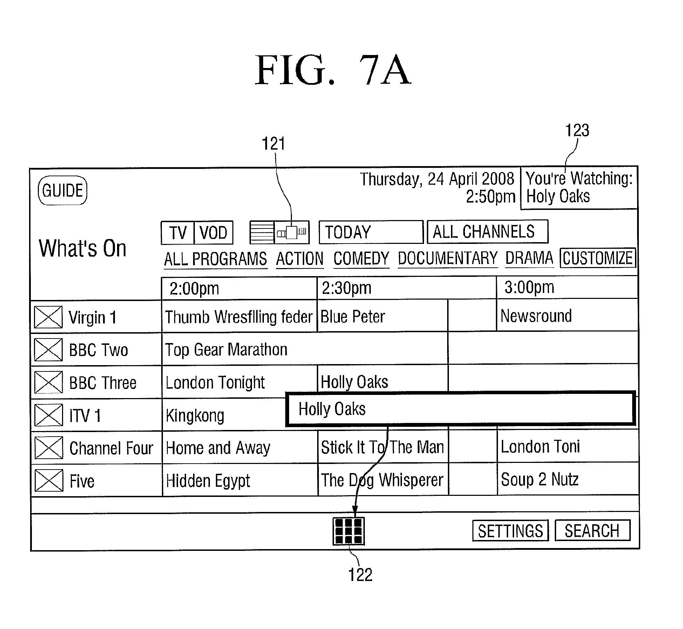

FIGS. 7A to FIG. 7C are schematic views provided to explain the function of a user manual according to exemplary embodiments of the present invention. As illustrated in FIG. 7A, a user may register the broadcasting program in a user's menu by touching the desired broadcasting program and dragging it to the user menu area 122. The user menu may provide functions regarding recording, managing recorded contents, and a playlist.

For instance, only by registering a broadcasting program in the user menu, an immediate/reserved recording may be performed. Or the immediate/reserved recording may be performed through a separate manipulation after the broadcasting program is registered in the user menu.

If the user menu area 122 is touched in the screen illustrated in FIG. 7A, the screen may be converted to the user menu screen (e.g., referred to as "my stuff").

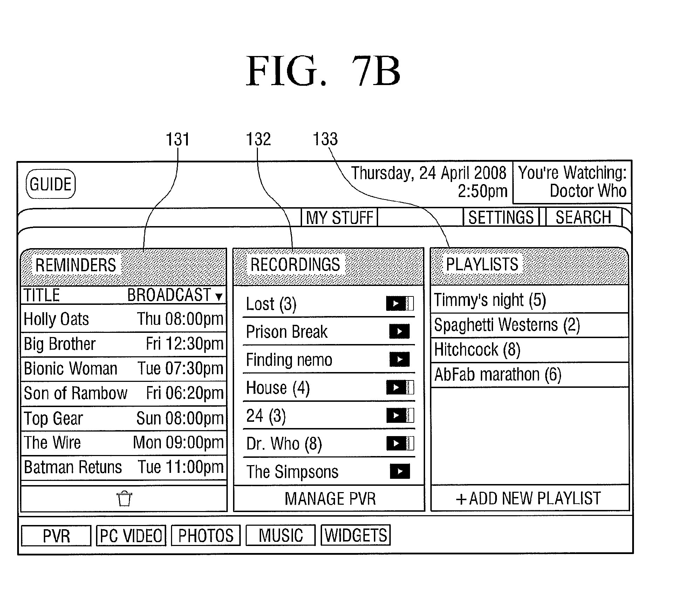

FIG. 7B illustrates the user menu screen described above. Referring to FIG. 7B, the user menu may provide a "reminders" menu 131 providing a list of selected broadcasting programs, a "recordings" menu 132 providing a list of recorded broadcasting programs, and a "playlists" menu 133 managing recorded broadcasting programs or multimedia contents by group. The broadcasting programs registered in the "reminders" menu 131 may be reserved for automatic viewing, and the terminal device 100 may notify a user of whether the automatic viewing is reserved via a pop-up window.

The broadcasting programs registered in the "reminders" menu 131 may be removed from the list automatically after a predetermined period of time (e.g. one day) passes, or compulsorily removed through a trash icon.

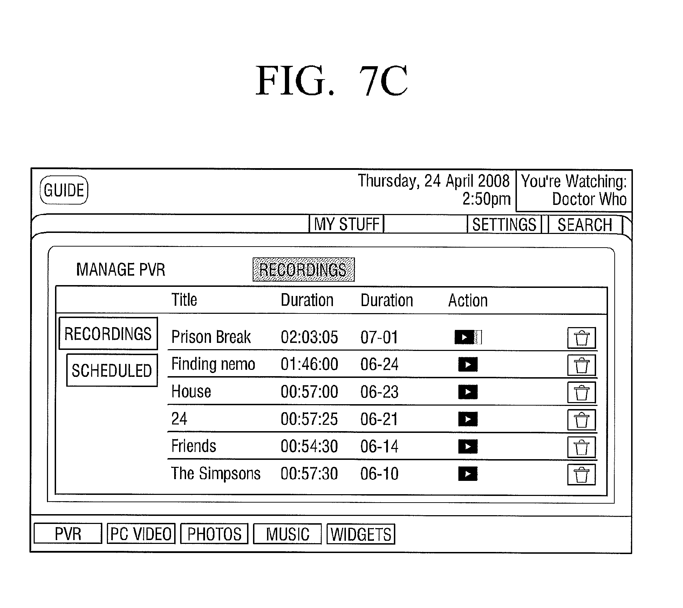

FIG. 7C illustrates the screen of the "recordings" menu 132 after the menu screen illustrated in FIG. 7B. The "recordings" menu may provide a list of recorded broadcasting programs and also provide a list of broadcasting programs to be recorded.

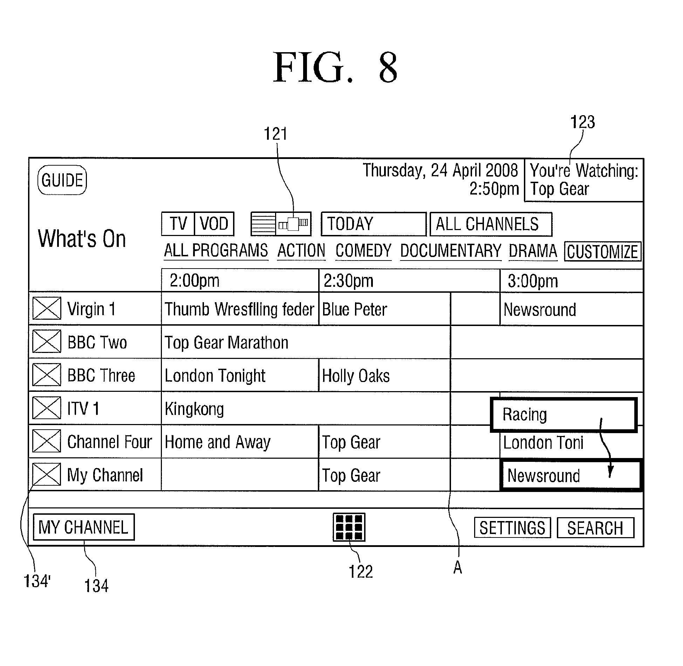

FIG. 8 is a schematic view provided to explain a user channel menu according to an exemplary embodiment of the present invention. As illustrated in FIG. 8, a user may generate a virtual channel by touching a desired broadcasting program area and dragging it to a user channel area, that is, a "my channel" area. In other words, if a user selects a "my channel", the broadcasting receiving apparatus 200 selects broadcasting programs registered in the "my channel" area consecutively. If there is no broadcasting program registered in the "my channel" area, a previous channel may be selected to display the broadcasting program, an alarm may go off, or a prestored image may be displayed.

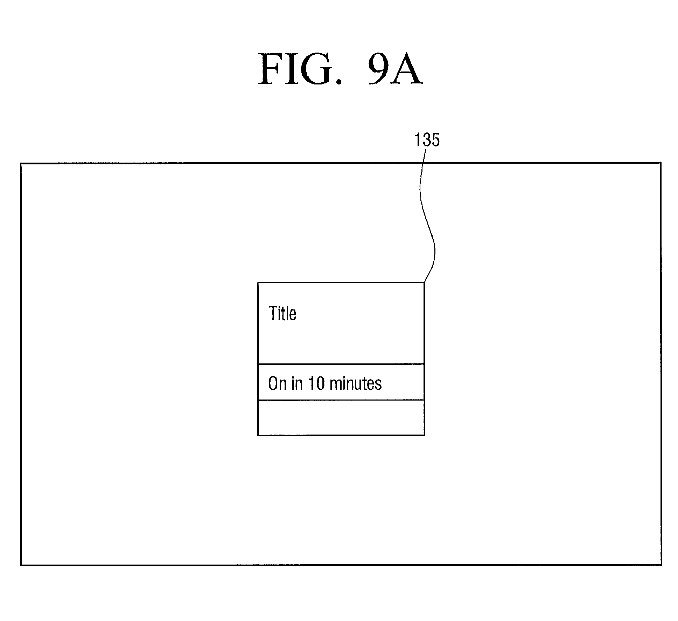

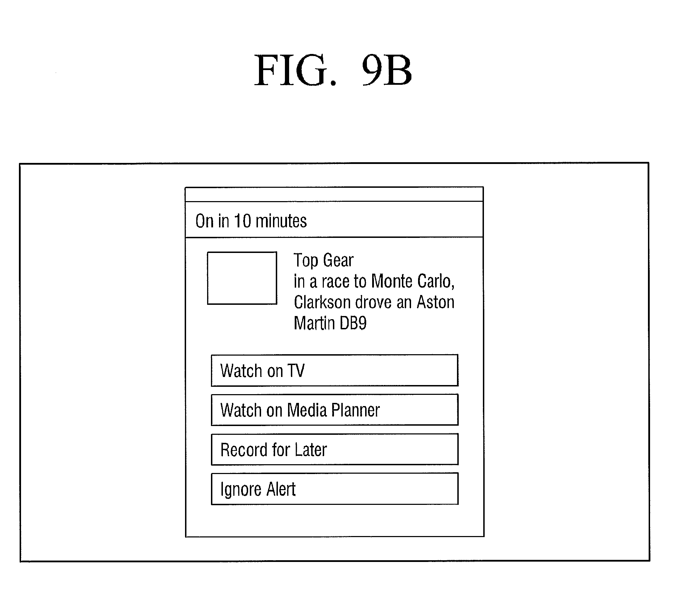

FIGS. 9A and 9B are schematic views provided to explain a background mode of a terminal device according to exemplary embodiments of the present invention.

Referring to FIG. 9A, if a user has not used the terminal device 100 for a predetermined period of time, a pop-up window 135 informing the time for reserved viewing of a broadcasting program may be displayed on the screen of the terminal device 100. The pop-up window may be displayed along with an audio-type alarm, and may accompany vibration of the terminal device 100.

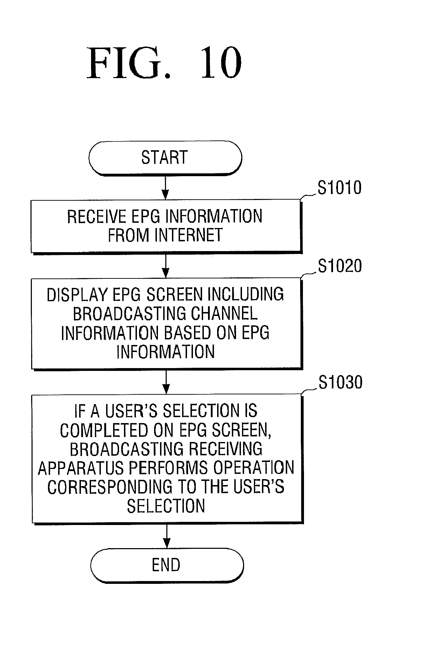

FIG. 9B illustrates a screen showing when the pop-up window 135 in FIG. 9A is clicked. Referring to FIG. 9B, a user may view a reserved broadcasting program via the broadcasting receiving apparatus 200 or via the terminal device 100. In addition, it is possible to reserve recording of the broadcasting program. FIG. 10 is a flow chart provided to explain a method for controlling a terminal device according to an exemplary embodiment of the present invention. According to the control method in FIG. 10, if the terminal device 100 receives EPG information from the Internet (S1010), the terminal device 100 displays an EPG screen including information regarding a broadcasting channel based on the received EPG information (S1020). The EPG screen including broadcasting channel information may display broadcasting program information with reference to an axis of time and an axis of broadcasting channel, or may display only broadcasting information.

Various menus in addition to EPG information may be displayed in the form of an icon or a text in S1020. Specifically, a user menu area for directly managing the broadcasting program selected by a user, a user channel area for composing a single channel with the plurality of programs selected by a user, and a program menu area for displaying information regarding a currently broadcast program in the broadcasting receiving apparatus 200 may be displayed, and other menus necessary to operate the terminal device 100 may be displayed in the form of a main menu or a sub menu.

If a user's selection is completed on the displayed EPG screen in S1020, the terminal device 100 transmits a control signal so that the broadcasting receiving apparatus 200 can perform an operation according to the user's selection (S1030).

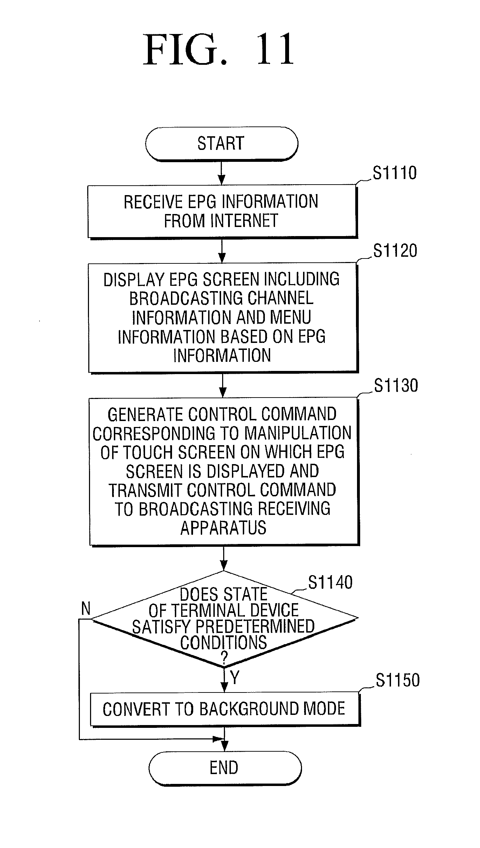

FIG. 11 is a flow chart of a method for controlling a terminal device according to another exemplary embodiment of the present invention.

According to the control method in FIG. 11, the terminal device 100 receives EPG information from the Internet (S1110), and displays an EPG screen including broadcasting channel information and menu information based on the received EPG information (S1120). The display unit 120 which is displayed as the EPG screen may be implemented as a touch screen, and the terminal device 100 generates a control command corresponding to the manipulation of the touch screen on the EPG screen and transmits the control command to the broadcasting receiving apparatus 200 (S1130).

Specifically, the control command transmitted to the broadcasting receiving apparatus 200 may be a command to select the broadcasting program, a command to record or preview the broadcasting program. The command to select the broadcasting program may be performed by touch and flick. That is, if a broadcasting program on the EPG screen is touched and flicked upward, it is determined that the broadcasting program is selected, and the command to select the broadcasting program is transmitted to the broadcasting receiving apparatus 200. However, this is only an example, and the command to select the broadcasting program may be performed if the program is touched and flicked left, right, or downward, is touched and held, or is touched and dragged to a certain area (for instance, dragged to an icon or a text indicating channel selection).

The command to record a broadcasting program may be performed if a main recording menu displayed on the EPG screen is touched (for instance, if an icon or a text indicating recording menu is displayed on the main screen), or a sub menu such as a detailed view screen and a user menu described above is touched. Alternatively, an immediate/reserved recording may be performed only if a certain icon or text (e.g., a user menu) is touched and dragged.

The command to preview a broadcasting program may be received on the detailed view screen of the broadcasting program. For instance, if there is touch and hold manipulation regarding a certain broadcasting program on the EPG screen, the EPG screen may display a screen indicating detailed information of the broadcasting program. The broadcasting program may be previewed if an icon or a text performing the preview is touched. If the command to preview a broadcasting program is received via a touch screen, the terminal device 100 sends the command to the broadcasting receiving apparatus 200, and the broadcasting receiving apparatus 200 may select the broadcasting program, transcode the contents, and transmit the contents to the terminal device 100. Sometimes, the terminal device 100 may receive a preview screen provided by a broadcasting program provider via the Internet, and display the preview screen.

The terminal device 100 may support the DLNA standard, and may receive media contents from an external apparatus supporting the DLNA standard to output to the display unit 120 or a speaker (not illustrated).

If the terminal device 100 satisfies a predetermined condition or conditions (S1140:Y), the terminal device 100 may be converted to a predetermined background mode (S1150). The predetermined conditions may include when the terminal device 100 has not been used for a predetermined period of time, or there on a predetermined area on the screen is touched.

The background mode may be at least one of an electronic album mode, a reserved program informing mode, a screen protection mode, and a widget mode. Detailed description regarding this will be omitted since it has already been explained above.

The terminal device 100 may display a user menu area to allow a user to manage a plurality of broadcasting programs selected by the user on the EPG screen, and the plurality of broadcasting programs may be selected by touch and drag.

The terminal device 100 may display a user channel area to allow a user to compose a single channel with a plurality of broadcasting channels selected by the user on the EPG screen, and the plurality of broadcasting programs may be selected by touch and drag.

According to the exemplary embodiments, a user is able to view the state of other channels and EPG information while watching a DTV without any interference. In addition, as a plurality of channels are edited and provided as a single channel to a user, a user does not have to change the channel to check the broadcasting time. A user is also able to use various functions such as reserved viewing, and immediate/reserved recording.

The foregoing exemplary embodiments and advantages are merely exemplary and are not to be construed as limiting the present invention. The present teaching can be readily applied to other types of apparatuses. Also, the description of exemplary embodiments of the present invention is intended to be illustrative, and not to limit the scope of the claims, and many alternatives, modifications, and variations will be apparent to those skilled in the art.

## Claims

1. A terminal device, coupled to a broadcasting receiving apparatus, the terminal device comprising:
a communication unit that receives electronic program guide (EPG) information from the Internet;
a display unit that displays broadcasting channel information on a EPG screen based on the EPG information; and
a control unit that controls the broadcasting receiving apparatus to perform an operation corresponding to a selection if the selection is made via the EPG screen.

2. The terminal device as claimed in claim 1, wherein the display unit comprises as a touch screen, and the control unit generates a control command corresponding to manipulation of the touch screen and transmits the control command to the broadcasting receiving apparatus via the communication unit.

3. The terminal device as claimed in claim 2, wherein the communication unit comprises
a first communication module that receives the EPG information; and
a second communication module that transmits the control command to the broadcasting receiving apparatus.

4. The terminal device as claimed in claim 2, wherein the control command includes at least one of a command to select a broadcasting program, a command to record a broadcasting program, and a command to preview a broadcasting program.

5. The terminal device as claimed in claim 2, wherein, if a command to preview a broadcasting program is received via the touch screen, the control unit transmits the command to the broadcasting receiving apparatus, and controls the communication unit so as to receive contents corresponding to the command to preview the broadcasting program.

6. The terminal device as claimed in claim 2, wherein the control unit displays detailed information of a broadcasting program if a command for a detailed viewing of the broadcasting program is received via the touch screen.

7. The terminal device as claimed in claim 2, wherein the display unit displays a user menu area for managing a plurality of broadcasting programs selected on the EPG screen, and the plurality of broadcasting programs are selected by touch and drag.

8. The terminal device as claimed in claim 2, wherein the display unit displays a user channel area for composing a single channel with a plurality of broadcasting programs selected on the EPG screen, and the plurality of broadcasting programs are selected by touch and drag.

9. A method for controlling a terminal device coupled to a broadcasting receiving apparatus, the method comprising:
receiving an electronic program guide (EPG) information from the Internet;
displaying an EPG screen including broadcasting channel information based on the EPG information; and
controlling the broadcasting receiving apparatus to perform an operation corresponding to a selection if the selection is made via the EPG screen.

10. The method for controlling a terminal device as claimed in claim 9, wherein the controlling generates a control command corresponding to manipulation of a touch screen on which the EPG screen is displayed and transmits the control command to the broadcasting receiving apparatus.

11. The method for controlling a terminal device as claimed in claim 10, wherein the terminal device receives the EPG information, and transmits the control command to the broadcasting receiving apparatus.

12. The method for controlling a terminal device as claimed in claim 9, wherein the displaying the EPG screen displays information regarding a broadcasting channel and a menu.

13. The method for controlling a terminal device as claimed in claim 9, wherein the control command includes at least one of a command to select a broadcasting program, a command to record a broadcasting program, and a command to preview a broadcasting program.

14. The method for controlling a terminal device as claimed in claim 9, further comprising:
transmitting a command to preview a broadcasting program to the broadcasting receiving apparatus and receiving contents corresponding to the command to preview the broadcasting program, if the command to preview the broadcasting program is received via the touch screen.

15. The method for controlling a terminal device as claimed in claim 9, further comprising:
displaying detailed information of a broadcasting program if a command to view the broadcasting program in detail is received via the touch screen.
